# EUROPEAN PATENT SPECIFICATION

(11) **EP 0 573 508 B1**
(45) Date of publication and mention of the grant of the patent: **23.04.1997**
(21) Application number: 92905606.7
(22) Date of filing: 21.01.1992
(51) Int. Cl.: C01B 7/01, B01D 53/34

(54) **METHOD AND DEVICE FOR THE PRODUCTION OF HYDROCHLORIC ACID**
VERFAHREN UND VORRICHTUNG ZUR ERZEUGUNG VON SALZSÄURE
PROCEDE ET DISPOSITIF DE PRODUCTION D'ACIDE CHLORHYDRIQUE

(30) Priority: 01.03.1991 SE 9100588
(43) Date of publication of application: 15.12.1993
(73) Proprietor: ABB FLÄKT AB, S-120 86 Stockholm (SE)
(72) Inventor: RAGNARSSON, Sven, S-360 44 Ingelstad (SE)
(74) Representative: Wiklund, Erik
(86) International application number: SE9200034
(87) International publication number: WO9215519

(56) References cited:
- EP-A- 0 393 402

## Description

The present invention relates to a method and a device for producing hydrochloric acid. More specifically, the invention concerns a method and a device for producing hydrochloric acid from hydrochloric-acid-containing flue gases resulting from the combustion of waste, such as household refuse.

The combustion of waste, such as industrial waste and household refuse, produces flue gases containing hydrochloric acid. This acid is formed e.g. when the burnt waste contains plastics, such as polyvinyl chloride. Before the flue gases are emitted into the atmosphere, the hydrochloric acid has to be removed by washing the flue gases with water in a so-called scrubber or washer. The hydrochloric acid dissolves in the water, resulting in a diluted aqueous solution of hydrochloric acid. The concentration of hydrochloric acid in the aqueous solution is about 2-10% by weight, depending among other things on the design of the scrubber and the concentration of hydrochloric acid in the flue gases. Here and in the following, the hydrochloric acid concentration is indicated in per cent by weight of HCl, based on the total amount of HCl and water.

Although this takes care of the problem of removing hydrochloric acid from the flue gases, another problem arises, namely how to remove the diluted hydrochloric acid solution obtained.

One way of doing this is to subject the hydrochloric acid solution to distillation. In the distillation, water is stripped at the beginning, but by and by a weak hydrochloric acid solution is instead stripped, the concentration of which rapidly increases to the concentration of the azeotrope formed by hydrochloric acid and water (about 20% by weight). The azeotrope makes it practically impossible to obtain hydrochloric acid with a higher concentration than about 20% by weight by common distillation. Further, the hydrochloric acid resulting from the distillation contains impurities, which considerably reduces its market potential. Thus, the hydrochloric acid produced by today's techniques has but a slight value or no value at all, and is to be regarded as waste.

In another method for cleaning hydrochloric-acid-containing flue gases to obtain a usable product, a sodium-base or calcium-base chemical is added to the washing liquid in the scrubber, whereby to bind the chlorine of the flue gases as sodium chloride or calcium chloride. Then, this product is recovered by evaporation of the washing liquid. However, also this method is disadvantageous in that use has to be made of a sodium-base or calcium-base chemical which in itself is more expensive than the salt constituting the end product. Thus, the production costs for the salt become unreasonably high, and the salt production thus has to be looked upon primarily as a way of avoiding deposition problems.

EP 0,393,402 discloses a prior-art method for cleaning hydrochloric-acid-containing flue gases by absorption in water. The absorption is performed in several steps, the concentration of hydrochloric acid being increased to above 50 g of HCl/l. The thus-obtained hydrochloric-acid-containing aqueous solution is distilled to separate the hydrochloric acid. As also appears from EP 0,393,402, it is known to add carbonates or hydroxides of alkali metals or alkaline earth metals to the washing liquid, and then evaporate the washing liquid to recover e.g. sodium chloride or calcium chloride.

The object of the present invention is to obviate the disadvantages of the prior art and provide a method and a device enabling the production of hydrochloric acid with a high concentration and a high degree of purity from hydrochloric-acid-containing gases.

The object of the invention is achieved by adding to the washing liquid a chloride-forming substance, so that the hydrochloric acid in the flue gases not only is bound by the chloride-forming substance as a chloride salt, but also is absorbed by the washing liquid in the form of 'free' hydrochloric acid. The thus-obtained washing liquid is optionally concentrated by stripping of water. Thereafter, sulphuric acid or some other strong acid is added to the washing liquid to drive off hydrochloric acid from the chloride salt in the washing liquid. Finally, hydrochloric acid is distilled from the washing liquid.

More specifically, the invention provides a method for producing hydrochloric acid by contacting a hydrochloric-acid-containing gas with an aqueous washing liquid, characterised by
a) adding a chloride-forming substance selected from oxides, hydroxides and carbonates of alkali metals and alkaline earth metals to the washing liquid before this is contacted with the hydrochloric-acid-containing gas,
b) branching off at least some of the washing liquid after the contact with the hydrochloric-acid-containing gas,
c) optionally concentrating the washing liquid branched off,
d) adding another acid than hydrochloric acid to the washing liquid branched off, thereby to release hydrochloric acid, and
e) thereafter distilling hydrochloric acid from the washing liquid branched off.

The invention also provides a device for producing hydrochloric acid from a hydrochloric-acid-containing gas, characterised by
a scrubber having inlets for hydrochloric-acid-containing gas, for aqueous washing liquid, and for a chloride-forming substance, as well as outlets for cleaned gas, and for hydrochloric-acid-containing washing liquid,
a means for branching off a portion of the hydrochloric-acid-containing washing liquid from the scrubber,
a distillation unit having inlets for the branched-off, hydrochloric-acid-containing washing liquid from the scrubber, optionally after concentration in an evaporation unit, and for an acid other than hydrochloric acid which, upon mixing with the branched-off washing liquid, releases hydrochloric acid, as well as an outlet for distilled hydrochloric acid, and
optionally an evaporation unit having an inlet for branched-off, hydrochloric-acid-containing washing liquid from the scrubber, as well as an outlet for concentrated hydrochloric-acid-containing washing liquid, this outlet communicating with the distillation-unit inlet for hydrochloric-acid-containing washing liquid.

Further distinctive features of the invention are recited in the appended claims.

Since the hydrochloric acid absorbed by the washing liquid is present as hydrochloric acid and as a chloride salt, the total amount of chlorine in the washing liquid can be made higher than in the case of only hydrochloric acid absorption. Further, by releasing the chlorine in the chloride salt as hydrochloric acid by adding sulphuric acid, the concentration of hydrochloric acid in the washing liquid can be increased more than is possible with only hydrochloric acid absorption. Consequently, the distillation yields hydrochloric acid with a concentration exceeding that of the azeotrope.

As mentioned above, the chloride-forming substance added to the washing liquid is an oxide, a hydroxide or a carbonate of an alkali metal or an alkaline earth metal. Potassium and especially sodium are preferred among the alkali metals. Of the alkaline earth metals, preference is given to calcium. It is especially preferred to use calcium carbonate as chloride-forming substance. The form in which the calcium carbonate is added is not critical, but it is usually added in the form of grains having a size of about 1-2 mm.

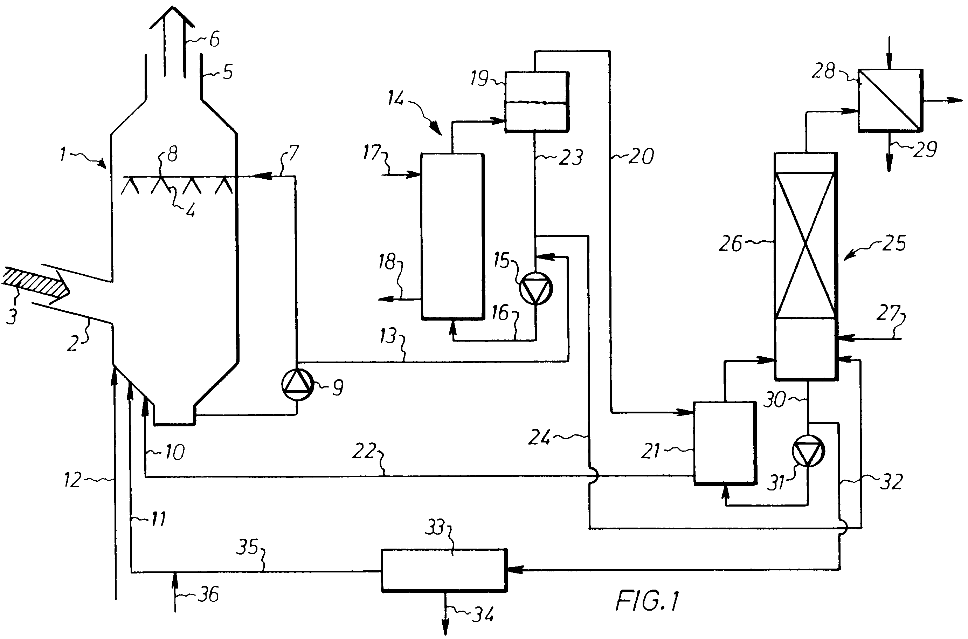

The method and the device according to the invention will be described below with reference to the accompanying drawing where Fig. 1 schematically illustrates a preferred embodiment of the device according to the invention. This embodiment is a device for cleaning flue gases from a refuse incinerator plant (not shown), but it will be appreciated that the invention is by no means restricted to such an application, but indeed is applicable to hydrochloric-acid-containing gases in general and the production of hydrochloric acid therefrom. It should especially be pointed out that in some cases, as in the embodiment described in Example 3, it is not necessary to concentrate the washing liquid further prior to the distillation of hydrochloric acid. In such cases, the evaporation unit shown in the drawing is dispensed with, and the washing liquid branched off from the scrubber is conducted directly to the distillation-unit inlet for hydrochloric-acid-containing washing liquid.

Fig. 1 shows a scrubber or washer 1 having an inlet 2 for flue gases 3 containing hydrochloric acid. The flue gases 3 are conducted through the scrubber 1, where they are contacted with an aqueous washing liquid 4 absorbing hydrochloric acid from the flue gases, which thus leave the scrubber through the outlet 5 in the cleaned state at 6. In the illustrated embodiment, the washing liquid 4 is contacted with the flue gases 3 by being supplied through a conduit 7 provided with a number of nozzles 8. Conveniently, the scrubber includes several nozzle-equipped conduits 7 arranged on different levels above one another in the scrubber to provide maximum contact between the flue gases and the washing liquid. In principle, the washing liquid 4 can be supplied from a tank (not shown) for fresh washing liquid, but is, in the illustrated embodiment, pumped by a pump 9 from the lower part of the scrubber, to which water is supplied through conduits 10 and 11 and a chloride-forming substance through a conduit 12. As mentioned earlier, the chloride-forming substance preferably is calcium carbonate.

The amount of chloride-forming substance in the washing liquid should be sufficient to bind about 10-50%, preferably 20-40%, most preferred about 30-35%, of the HCl taken up by the washing liquid.

Since the acid is taken up by the washing liquid both as absorbed 'free' hydrochloric acid and as 'bound' chloride, the separation of hydrochloric acid is very effective and practically all the hydrochloric acid in the flue gases is taken up by the washing liquid. Generally, the cleaned flue gases contain less than 10 mg of HCl/Nm³.

Some of the washing liquid, preferably about 1-7% by weight, is branched off from the conduit 7, which with the aid of the pump 9 circulates the washing liquid from the lower part of the scrubber to the upper part, and conducted through a conduit 13 to an evaporator 14 where it is concentrated. The washing liquid is fed to the evaporator by a pump 15 and a conduit 16, and is concentrated in conventional manner. The heat transfer medium used in the evaporator suitably is steam having a pressure of about 1-2 bar, which corresponds to a temperature of about 100-115°C. The steam is introduced into the evaporator as indicated by the arrow 17, and is drawn off in the form of a condensate at the arrow 18. In the separator 19 associated with the evaporation unit, the concentrated washing liquid is separated from evaporated water, which is conducted through the conduit 20 to a condenser 21, where the steam, under heat exchange, is cooled and condensed to water, which is recycled to the scrubber 1 via the conduit 22.

The washing liquid, initially having a concentration of hydrochloric acid of about 2-10% by weight, has been concentrated, by the evaporation, to have a concentration of 'free' hydrochloric acid of about 13-18% by weight. It is difficult to attain a concentration of 'free' hydrochloric acid exceeding about 18% by weight, since this comes too close to the azeotrope of hydrochloric acid with water, which has a concentration of hydrochloric acid of about 20% by weight.

From the separator 19, the concentrated washing liquid is recycled to the evaporator via a conduit 23, prior to which some of the washing liquid has been drawn off and conducted to a distillation unit 25 via a conduit 24. This unit includes a distillation tower 26, into the lower part of which the concentrated washing liquid is fed. As indicated by the arrow 27, also sulphuric acid is fed to the lower part of the distillation tower. The sulphuric acid can be supplied either separately or together with the concentrated washing liquid through the conduit 24.

As mentioned earlier, the purpose of adding sulphuric acid is to release as hydrochloric acid the chlorine which is bound as chloride in the washing liquid. To this end, the sulphuric acid should be concentrated, and use is normally made of sulphuric acid of about 98% by weight. It is actually possible to use some other strong acid for driving off the bound hydrochloric acid, but the use of sulphuric acid is preferred. Preferably, the amount of sulphuric acid added is adjusted so as to be essentially equivalent to the amount of chlorine bound as chloride in the washing liquid.

When the sulphuric acid is added, the chlorine bound as chloride in the washing liquid is released as hydrochloric acid, and the washing liquid will instead contain a hydrogen sulphate or sulphate of the chloride-forming agent, e.g. sodium or, preferably, calcium.

In the distillation tower 26, the concentrated washing liquid is distilled in conventional manner. Distillation takes place at atmospheric pressure or at a reduced pressure and preferably at a reduced pressure as vacuum distillation. In the distillation, hydrochloric acid leaves in vapour phase, which is condensed in a separator 28 yielding liquid, concentrated hydrochloric acid 29. Since the hydrochloric acid which is distilled off includes both the 'free' hydrochloric acid in the concentrated washing liquid (about 13-18% by weight of HCl) and the hydrochloric acid released by the addition of sulphuric acid, the hydrochloric acid 29 obtained from the separator 28 will have a concentration exceeding that of the azeotrope. In general, the concentration of the hydrochloric acid obtained is about 20-36% by weight under the conditions indicated above (about 2-10% by weight of hydrochloric acid in the the original washing liquid, about 10-50% of the hydrochloric acid being bound as chloride by the addition of a chloride-forming substance).

The distillation residue is drawn off the lower part of the distillation column through a conduit 30, and is recycled to the distillation tower 26 via the heat exchanger 21 by means of a pump 31. In the heat exchanger 21, the distillation residue acts as cooling medium for condensating the water vapour which is leaving when the washing liquid is evaporated. When the distillation residue is recycled, a certain amount is branched off from the conduit 30 via a conduit 32. This amount is treated at 33 by neutralisation and precipitation of heavy metals. Preferably, neutralisation is performed by adding calcium oxide or calcium hydroxide, resulting in the precipitation of calcium sulphate, and the precipitation of heavy metals is preferably effected by adding sodium sulphide, so that the heavy metals are precipitated as sulphides. After having thus cleaned the distillation residue and separated the impurities in the form of a sludge 34, the purified distillation residue, which essentially consists of pure water, is conducted to the scrubber 1 via the conduit 35 for preparation of new washing liquid.

The illustrated design gives a mainly closed flue-gas-cleaning system which, apart from taking in contaminated flue gases and discharging cleaned flue gases, only discharges hydrochloric acid in the form of a highly concentrated and useful product 29 and a heavy-metal sludge 34 to be stored. There is, in addition, required an addition of a chloride-forming substance, such as calcium carbonate, through the conduit 12. If need be, additional water can be supplied to the system, either directly to the scrubber 1 or at any other suitable point, e.g. to the conduit 35, as indicated by the arrow 36 in the drawing.

The invention will now be further illustrated in a few Examples. All contents and percentage figures indicate per cent by weight, unless otherwise stated.

### EXAMPLE 1

In a refuse incineration plant, about 10 tonnes of household refuse was burnt every hour. The resulting amount of flue gases was about 60,000 Nm³/h, and the flue gases contained about 60 kg of HCl/h. The flue gases were treated in a device of the type illustrated in the drawing in order to remove the hydrochloric acid and produce a concentrated hydrochloric acid solution.

In the treatment, the flue gases were conducted through a scrubber and contacted with a washing liquid to which was added a chloride-forming substance in the form of about 27.5 kg of CaCO₃/h per 100 m³ of washing liquid. By the contact with the washing liquid, essentially all the hydrochloric acid in the flue gases was absorbed, some being absorbed as 'free' hydrochloric acid in the washing liquid and the remainder being bound as calcium chloride (CaCl₂) in the washing liquid. From the scrubber a certain amount of the washing liquid was branched off, which consisted of about 1300 kg of H₂O/h, about 40 kg of HCl/h and about 30 kg of CaCl₂/h, i.e. the washing liquid contained about 3% HCl. The thus-removed washing liquid was fed to an evaporator, where about 1120 kg of H₂O/h was evaporated and, after condensation, recycled to the scrubber, while a concentrated washing liquid containing about 180 kg of H₂O/h, about 40 kg of HCl/h and about 30 kg of CaCl₂/h was obtained. The concentrated washing liquid, which thus had a concentration of hydrochloric acid of about 18%, was then conducted to a distillation plant. In connection with the supply of the concentrated washing liquid to the distillation tower, about 53 kg of 98% sulphuric acid/h was added, so that the chlorine bound as chloride was released as hydrochloric acid. As a result, the supply of concentrated washing liquid to the distillation tower contained about 25% of hydrochloric acid which was distilled off and, after condensation, recovered as a product.

In the manner described above, the distillation residue was treated with calcium oxide and sodium sulphide to neutralise and precipitate heavy metals, whereupon the thus-cleaned distillation residue was recycled to the scrubber for the production of new washing liquid.

### EXAMPLE 2

Example 1 was repeated, but to the washing liquid was added a chloride-forming substance in the form of about 11 kg of CaCO₃/h per 100 m³ of washing liquid. The washing liquid branched off from the scrubber consisted of about 5,200 kg of H₂O, about 52 kg of HCl and about 12 kg of CaCl₂ per hour. During evaporation, about 4,965 kg of H₂O/h was evaporated, and the resulting flow of washing liquid contained about 235 kg of H₂O, about 50 kg of HCl and 12 kg of CaCl₂ per hour. About 21 kg of 98% sulphuric acid/h was added to the concentrated washing liquid, and the washing liquid then contained about 20% of HCl which was distilled off and recovered as a product.

### EXAMPLE 3

Example 1 was repeated, but to the washing liquid was added a chloride-forming substance in the form of about 41 kg of CaCO₃/h per 100 m³ of washing liquid. The washing liquid branched off from the scrubber consisted of about 135 kg of H₂O, about 30 kg of HCl and about 45.6 kg of CaCl₂ per hour. In this case, no evaporation was required, and the washing liquid branched off was therefore conducted from the scrubber directly to the distillation unit. About 80 kg of 98% sulphuric acid/h was added to the washing liquid, and the resulting washing liquid then contained about 30% of HCl which was distilled off and recovered as a product.

## Claims

1. A method for producing hydrochloric acid by contacting a hydrochloric-acid-containing gas with an aqueous washing liquid, **characterised** by
a) adding a chloride-forming substance selected from oxides, hydroxides and carbonates of alkali metals and alkaline earth metals to the washing liquid before this is contacted with the hydrochloric-acid-containing gas,
b) branching off at least some of the washing liquid after the contact with the hydrochloric-acid-containing gas,
c) optionally concentrating the washing liquid branched off,
d) adding another acid than hydrochloric acid to the washing liquid branched off, thereby to release hydrochloric acid, and
e) thereafter distilling hydrochloric acid from the washing liquid branched off.

2. A method as claimed in claim 1, **characterised** by condensing and recycling as new washing liquid the water evaporated during concentration of the washing liquid.

3. A method as claimed in claim 1 or 2, **characterised** by adding CaCO₃ as chloride-forming substance.

4. A method as claimed in any one of preceding claims, **characterised** by treating the residue from the distillation of hydrochloric acid with a calcium-containing substance to precipitate gypsum, and with a sulphur-containing substance to precipitate heavy metals as sulphides.

5. A method as claimed in claim 4, **characterised** by treating the distillation residue with CaCO₃ and Na₂S.

6. A method as claimed in claim 4 or 5, **characterised** by recycling as new washing liquid the distillation residue after precipitation and separation of gypsum and heavy-metal sulphides.

7. A device for producing hydrochloric acid from a hydrochloric-acid-containing gas, **characterised** by
a scrubber (1) having inlets (2, 10, 11, 12) for hydrochloric-acid-containing gas (3), for aqueous washing liquid, and for a chloride-forming substance, as well as outlets (5, 7) for cleaned gas (6) and for hydrochloric-acid-containing washing liquid,
a means (13) for branching off a portion of the hydrochloric-acid-containing washing liquid from the scrubber,
a distillation unit (25) having inlets (27, 24) for the branched-off, hydrochloric-acid-containing washing liquid from the scrubber, optionally after concentration in an evaporation unit (14), and for an acid other than hydrochloric acid which, upon mixing with the branched-off washing liquid, releases hydrochloric acid, as well as an outlet (29) for distilled hydrochloric acid, and
optionally an evaporation unit (14) having an inlet (16) for branched-off, hydrochloric-acid-containing washing liquid from the scrubber, as well as an outlet (24) for concentrated hydrochloric-acid-containing washing liquid, this outlet communicating with the distillation-unit inlet for hydrochloric-acid-containing washing liquid.

8. A device as claimed in claim 7, **characterised** in that the evaporation unit (14) includes a condenser (21) adapted for condensing evaporated water and connected to the scrubber (1) in order to recycle the condensed water as washing liquid.

9. A device as claimed in claim 7 or 8, **characterised** in that the distillation unit (25) is connected to the scrubber (1) in order to recycle the distillation residue to the scrubber.

10. A device as claimed in claim 9, **characterised** in that the distillation residue from the distillation unit (25) is recycled via a cleaning device (33) for precipitating and separating heavy-metal sulphides and gypsum from the distillation residue.

## Patentansprüche

1. Verfahren zur Herstellung von Chlorwasserstoffsäure durch In-Kontakt-Bringen eines Chlorwasserstoffsäure enthaltenden Gases mit einer wäßrigen Waschflüssigkeit, gekennzeichnet dadurch, daß man
(a) eine Chlorid bildende Substanz, die gewählt ist aus Oxiden, Hydroxiden und Carbonaten von Alkalimetallen und Erdalkalimetallen, der Waschflüssigkeit zusetzt, bevor diese mit dem Chlorwasserstoffsäure enthaltenden Gas in Kontakt gebracht wird;
(b) wenigstens etwas von der Waschflüssigkeit nach dem Kontakt mit dem Chlorwasserstoffsäure enthaltenden Gas abzweigt;
(c) gegebenenfalls die abgezweigte Waschflüssigkeit konzentriert;
(d) eine andere Säure als Chlorwasserstoffsäure der abgezweigten Waschflüssigkeit zusetzt und dadurch Chlorwasserstoffsäure freisetzt; und
(e) danach Chlorwasserstoffsäure von der abgezweigten Waschflüssigkeit abdestilliert.

2. Verfahren nach Anspruch 1, gekennzeichnet dadurch, daß man das während des Konzentrierens der Waschflüssigkeit verdampfte Wasser kondensiert und als neue Waschflüssigkeit in den Kreislauf zurückführt.

3. Verfahren nach Anspruch 1 oder 2, gekennzeichnet dadurch, daß man CaCO₃ als Chlorid bildende Substanz zusetzt.

4. Verfahren nach einem der vorangehenden Ansprüche, gekennzeichnet dadurch, daß man den Rückstand von der Destillation der Chlorwasserstoffsäure mit einer Calcium enthaltenden Substanz behandelt und so Gips ausfällt und mit einer Schwefel enthaltenden Substanz behandelt, um Schwermetalle als Sulfide zu fällen.

5. Verfahren nach Anspruch 4, gekennzeichnet dadurch, daß man den Destillationsrückstand mit CaCO₃ und Na₂S behandelt.

6. Verfahren nach Anspruch 4 oder 5, gekennzeichnet dadurch, daß man den Destillationsrückstand nach Fällung und Abtrennung von Gips und Schwermetallsulfiden als neue Waschflüssigkeit im Kreislauf zurückführt.

7. Vorrichtung zur Herstellung von Chlorwasserstoffsäure aus einem Chlorwasserstoffsäure enthaltenden Gas, gekennzeichnet durch
- einen Skrubber bzw. Wäscher (1) mit Einlässen (2, 10, 11, 12) für Chlorwasserstoffsäure enthaltendes Gas (3), für wäßrige Waschflüssigkeit und für eine Chlorid bildende Substanz sowie mit Auslässen (5, 7) für gereinigtes Gas (6) und für Chlorwasserstoffsäure enthaltende Waschflüssigkeit;
- eine Einrichtung (13) zum Abzweigen einer Teilmenge der Chlorwasserstoffsäure enthaltenden Waschflüssigkeit aus dem Skrubber bzw. Wäscher;
- eine Destillationseinheit (25) mit Einlässen (27, 24) für die abgezweigte, Chlorwasserstoffsäure enthaltende Waschflüssigkeit aus dem Skrubber bzw. Wäscher gegebenenfalls nach Konzentrieren in einer Verdampfungseinheit (14) und für eine von Chlorwasserstoffsäure verschiedene Säure, die - bei Mischen mit der abgezweigten Waschflüssigkeit - Chlorwasserstoffsäure freisetzt, sowie einem Auslaß (29) für destillierte Chlorwasserstoffsäure; und
- gegebenenfalls eine Verdampfungseinheit (14), die einen Einlaß (16) für abgezweigte, Chlorwasserstoffsäure enthaltende Waschflüssigkeit aus dem Skrubber bzw. Wäscher sowie einen Auslaß (24) für konzentrierte Chlorwasserstoffsäure enthaltende Waschflüssigkeit aufweist, wobei dieser Auslaß mit dem Einlaß an der Destillationseinheit für Chlorwasserstoffsäure enthaltende Waschflüssigkeit in Verbindung steht.

8. Vorrichtung nach Anspruch 7, gekennzeichnet dadurch, daß die Verdampfungseinheit (14) einen Kondensator (21) einschließt, der zum Kondensieren von verdampftem Wasser geeignet ist und mit dem Skrubber bzw. Wäscher (1) in Verbindung steht, um das kondensierte Wasser als Waschflüssigkeit im Kreislauf zu führen.

9. Vorrichtung nach Anspruch 7 oder Anspruch 8, gekennzeichnet dadurch, daß die Destillationseinheit (25) mit dem Skrubber bzw. Wäscher (1) verbunden ist, um den Destillationsrückstand dem Skrubber bzw. Wäscher im Kreislauf wieder zuzuführen.

10. Vorrichtung nach Anspruch 9, gekennzeichnet dadurch, daß der Destillationsrückstand von der Destillationseinheit (25) über eine Reinigungsvorrichtung (33) zur Fällung und Abtrennung von Schwermetallsulfiden und Gips von dem Destillationsrückstand im Kreislauf geführt wird.

## Revendications

1. Procédé de production d'acide chlorhydrique par mise en contact d'un gaz contenant de l'acide chlorhydrique avec un liquide de lavage aqueux, caractérisé par
a) l'addition d'une substance formant des chlorures, sélectionnée parmi des oxydes, des hydroxydes et des carbonates de métaux alcalins et de métaux alcalino-terreux, au liquide de lavage avant sa mise en contact avec le gaz contenant de l'acide chlorhydrique,
b) la dérivation d'au moins une partie du liquide de lavage après le contact avec le gaz contenant de l'acide chlorhydrique,
c) la concentration facultative du liquide de lavage dérivé,
d) l'addition d'un acide autre que l'acide chlorhydrique au liquide de lavage dérivé, pour ainsi libérer l'acide chlorhydrique et
e) la distillation subséquente de l'acide chlorhydrique du liquide de lavage dérivé.

2. Procédé selon la revendication 1, caractérisé par la condensation et le recyclage, sous forme de nouveau liquide de lavage, de l'eau évaporée durant la concentration du liquide de lavage.

3. Procédé selon la revendication 1 ou 2, caractérisé par l'addition de CaCO₃ en tant que substance formant des chlorures.

4. Procédé selon l'une quelconque des revendications précédentes, caractérisé par le traitement du résidu de la distillation de l'acide chlorhydrique par une substance contenant du calcium pour précipiter le gypse et par une substance contenant du soufre pour précipiter les métaux lourds sous forme de sulfures.

5. Procédé selon la revendication 4, caractérisé par le traitement du résidu de distillation par CaCO₃ et Na₂S.

6. Procédé selon la revendication 4 ou 5, caractérisé par le recyclage, en tant que nouveau liquide de lavage, du résidu de distillation après précipitation et séparation du gypse et des sulfures de métaux lourds.

7. Dispositif de production d'acide chlorhydrique à partir d'un gaz contenant de l'acide chlorhydrique, caractérisé par
un épurateur (1) ayant des entrées (2, 10, 11, 12) destinées au gaz contenant de l'acide chlorhydrique (3), au liquide de lavage aqueux et à une substance formant des chlorures, de même que des sorties (5, 7) destinées au gaz nettoyé (6) et au liquide de lavage contenant de l'acide chlorhydrique,
un moyen (13) de dérivation d'une partie du liquide de lavage contenant de l'acide chlorhydrique hors de l'épurateur,
une unité de distillation (25) comportant des entrées (27, 24) destinées au liquide de lavage contenant de l'acide chlorhydrique, dérivé de l'épurateur, facultativement après concentration dans une unité d'évaporation (14) et à un acide autre que l'acide chlorhydrique qui, lors du mélange avec le liquide de lavage dérivé, libère l'acide chlorhydrique, de même qu'une sortie (29) destinée à l'acide chlorhydrique distillé et
facultativement une unité d'évaporation (14) comportant une entrée (16) destinée au liquide de lavage contenant de l'acide chlorhydrique, dérivé de l'épurateur, de même qu'une sortie (24) destinée au liquide de lavage concentré contenant de l'acide chlorhydrique, cette sortie communiquant avec l'entrée de l'unité de distillation destinée au liquide de lavage contenant de l'acide chlorhydrique.

8. Dispositif selon la revendication 7, caractérisé en ce que l'unité d'évaporation (14) comprend un condensateur (21) conçu pour condenser l'eau évaporée et connecté à l'épurateur (1) dans le but de recycler l'eau condensée en tant que liquide de lavage.

9. Dispositif selon la revendication 7 ou 8, caractérisé en ce que l'unité de distillation (25) est connecté à l'épurateur (1) dans le but de recycler le résidu de distillation à l'épurateur.

10. Dispositif selon la revendication 9, caractérisé en ce que le résidu de distillation provenant de l'unité de distillation (25) est recyclé via un dispositif de purification (33) destiné à précipiter et séparer les sulfures de métaux lourds et le gypse du résidu de distillation.
